# FASCICULE DE BREVET EUROPEEN

(11) **EP 4 098 856 B1**
(45) Date de publication et mention de la délivrance du brevet: **21.05.2025**
(21) Numéro de dépôt: 22176960.7
(22) Date de dépôt: 02.06.2022
(51) Int. Cl.: F01P 7/10, B60K 11/08, F01P 11/10

(54) **DISPOSITIF DE RÉGULATION DE LA CIRCULATION D'UN FLUX D'AIR EXTÉRIEUR POUR UNE CALANDRE D'UN VÉHICULE AUTOMOBILE**
VORRICHTUNG ZUR REGULIERUNG DER STRÖMUNG EINES AUSSENLUFTSTROMS FÜR EINEN KÜHLERGRILL EINES KRAFTFAHRZEUGS
DEVICE FOR REGULATING THE CIRCULATION OF A FLOW OF EXTERNAL AIR FOR A GRILLE OF A MOTOR VEHICLE

(30) Priorité: 03.06.2021 FR 2105852
(43) Date de publication de la demande: 07.12.2022
(73) Titulaire: Renault s.a.s, 92100 Boulogne Billancourt (FR)
(72) Inventeur: DUCHET-ANNEZ, Christophe, 78288 GUYANCOURT (FR); SOLTOIAN, Serghei, 78288 GUYANCOURT (FR)

(56) Documents cités:
- WO-A1-2019/186044
- FR-A1- 3 053 008
- US-A1- 2012 100 790

## Description

L'invention concerne un dispositif de régulation de la circulation d'un flux d'air extérieur pour une calandre ou une bouche d'aération d'un véhicule automobile. L'invention concerne également au moins une installation de refroidissement d'un fluide caloporteur, ou de ventilation, de chauffage et/ou de climatisation d'un véhicule comprenant un tel dispositif de régulation de la circulation. L'invention concerne enfin un véhicule automobile équipé d'une telle installation et/ou d'un tel dispositif.

Les véhicules automobiles comprennent une calandre montée sur une extrémité avant du véhicule permettant la circulation d'un flux d'air extérieur vers au moins un module de refroidissement d'au moins un fluide destiné à circuler au travers notamment d'un dispositif de chauffage, tel qu'un radiateur d'une installation de ventilation, de chauffage et/ou de climatisation du véhicule, autrement appelée installation HVAC, pour l'acronyme anglais « Heating, Ventilating and Air-Conditioning ». Un tel module de refroidissement comprend habituellement un assemblage, notamment un empilement, d'échangeurs thermiques traversés par l'air ambiant afin de refroidir au moins un fluide, notamment un fluide caloporteur destiné au refroidissement d'un moteur à combustion ou un fluide réfrigérant destiné à l'HVAC, ou un fluide de lubrification destiné à une boîte de vitesse par exemple.

Il est connu d'équiper, au niveau du trajet d'admission de l'air, un dispositif de réglage de la circulation du flux d'air qui comprend une pluralité de volets permettant sélectivement de bloquer et/ou de réguler le flux d'air en amont du module de refroidissement, notamment d'un échangeur thermique tel qu'un radiateur par exemple. Un tel dispositif de réglage est particulièrement dimensionné afin que, lorsqu'il est ouvert et permet le passage du flux d'air, un flux d'air important puisse atteindre le radiateur.

Toutefois lorsque le dispositif de réglage est ouvert et que le véhicule est en déplacement, des particules étrangères dotées d'une énergie cinétique peuvent passer entre volets et endommager l'installation sous l'effet de la projection des particules contre l'installation. Pour protéger cette dernière d'un tel endommagement, les échangeurs thermiques peuvent classiquement être équipés d'une grille de protection, aussi dite « pare-pierre », montée en amont selon le sens de circulation du flux d'air. Une telle grille de protection présente l'inconvénient de générer un encombrement supplémentaire au sein du module de refroidissement qui peut s'avérer problématique dans un contexte de réduction de l'encombrement généré en face avant des véhicules. Par ailleurs elle nécessite l'intégration d'aménagements spécifiques afin d'assurer leur fixation au sein du module de refroidissement.

Chacun des documents WO2019186044A1, FR3053008A1 et US2012/100790A1 divulgue un dispositif de régulation de la circulation d'un flux d'air pour une calandre d'un véhicule comprenant un cadre et un moyen de réglage de l'admission du flux d'air comprenant une pluralité de volets montés pivotants.

La présente invention s'inscrit dans ce contexte et vise à résoudre les inconvénients susnommés. En d'autres termes, l'invention vise à s'affranchir de la nécessité d'intégrer une grille de protection sur au moins un échangeur du module de refroidissement. L'invention a ainsi pour but de proposer une solution simple d'intégration, à faible coût et adaptée à une grande variété de modules de refroidissement. Tout en assurant une protection des éléments constitutifs d'un module de refroidissement, l'invention vise aussi à limiter les pertes de charges.

L'invention concerne un dispositif de régulation de la circulation d'un flux d'air extérieur pour une calandre ou une bouche d'aération d'un véhicule comprenant un cadre et un moyen de réglage de l'admission du flux d'air extérieur comprenant une pluralité de volets reliés audit cadre et déplacés par un moyen d'entrainement. En particulier :
- les volets sont chacun montés pivotants autour d'un axe de pivotement par rapport au cadre de sorte à être pivotés entre une première position, restreignant le flux d'air extérieur à travers la calandre ou la bouche d'aération du véhicule, et une deuxième position permettant la circulation du flux d'air au travers de celle-ci ;
- les axes de pivotement des volets sont parallèles entre eux, des volets adjacents étant séparés par un espace défini par une dimension d'entraxe le long d'une première direction orthogonale aux axes de pivotement et passant par lesdits axes ;
- le dispositif de régulation comprend un organe de blocage porté par le cadre et comportant une pluralité d'ailettes s'étendant parallèlement à au moins l'un des axes de pivotement, l'agencement desdites ailettes relativement à la pluralité de volets étant configuré pour entraver le passage de projections extérieures au travers du dispositif de régulation le long du sens de circulation du flux d'air extérieur au moins lorsque les volets sont disposés dans la deuxième position.

Au moins une ailette de la pluralité d'ailettes peut être disposée en regard de chacun des espaces séparant deux axes de pivotement de volets adjacents. Par exemple, la pluralité d'ailettes peut être disposée de sorte à s'étendre hors de volumes délimités par les volets lorsqu'ils sont déplacés entre la première position et la deuxième position. Notamment, l'au moins une ailette peut être séparée de chacun des axes de pivotement délimitant l'espace correspondant par un espacement, défini le long de la première direction, de dimension inférieure ou égale à 30 mm, notamment inférieure ou égale à 20 mm, voire inférieure ou égale à 17mm. Particulièrement, l'au moins une ailette peut s'étendre à équidistance deux axes de pivotement de volets adjacents.

Un sous-ensemble d'ailettes de la pluralité d'ailettes peut être disposé, le long du sens de circulation du flux d'air extérieur, en regard d'au moins un même espace séparant deux axes de pivotement de volets adjacents, dits premier axe de pivotement et deuxième axe de pivotement :
- une première ailette extrême du sous-ensemble d'ailettes présentant un premier espacement, le long de la première direction, relativement au premier axe de pivotement ;
- une deuxième ailette extrême du sous-ensemble d'ailettes présentant un deuxième espacement, le long de la première direction, relativement au deuxième axe de pivotement ;
- des ailettes adjacentes du sous-ensemble d'ailettes présentant un espacement intermédiaire, le long de la première direction.
Le premier espacement, le deuxième espacement et l'espacement intermédiaire peuvent alors être de dimension inférieure ou égale à 30 mm, notamment inférieure ou égale à 20 mm, voire inférieure ou égale à 17mm.

Au moins une face d'une ailette de la pluralité d'ailettes peut présenter un angle d'inclinaison α relativement au cadre compris entre 0° et ±45°, voire entre 0° et ±30°, de sorte à dévier la circulation du flux d'air extérieur.

Le cadre peut comprendre au moins un premier flanc et un deuxième flanc, opposés l'un à l'autre et reliés entre eux par un troisième flanc et un quatrième flanc, le premier flanc et le deuxième flanc portant le moyen de réglage et l'organe de blocage. Particulièrement, l'organe de blocage peut s'étendre au moins sur l'ensemble d'un écartement séparant le premier flanc du deuxième flanc.

Le cadre peut comprendre au moins un bras de support s'étendant transversalement à au moins un axe de pivotement et sur lequel sont montés pivotant tout ou partie de la pluralité de volets du moyen de réglage, l'organe de blocage étant au moins en partie relié audit bras.

L'organe de blocage peut s'étendre essentiellement dans un volume interne du dispositif de régulation, délimité par le cadre.

Selon un mode de réalisation, l'organe de blocage peut être configuré pour être disposé à proximité de la pluralité de volets du moyen de réglage de sorte à être interposé entre tout ou partie du moyen de réglage et au moins un échangeur thermique le long du sens de circulation du flux d'air extérieur et/ou de sorte à être aligné avec tout ou partie du moyen de réglage le long d'un axe orthogonal à un axe de pivotement d'au moins un volet et transversal au sens de circulation du flux d'air extérieur.

Selon un autre mode de réalisation, l'organe de blocage peut être configuré pour être disposé à proximité de la pluralité de volets du moyen de réglage de sorte que tout ou partie de la pluralité de volets est interposée entre l'organe de blocage et au moins un échangeur thermique le long du sens de circulation du flux d'air extérieur et/ou de sorte que l'organe de blocage est aligné avec tout ou partie du moyen de réglage le long d'un axe orthogonal à un axe de pivotement d'au moins un volet et transversal au sens de circulation du flux d'air extérieur.

L'invention concerne également une installation d'un véhicule, comprenant un dispositif de régulation de la circulation d'un flux d'air extérieur tel qu'exposé précédemment et au moins un échangeur thermique configuré pour refroidir ou chauffer le flux d'air extérieur, le dispositif de régulation étant disposé en amont de l'au moins un échangeur thermique le long du sens de circulation du flux d'air extérieur.

L'invention concerne enfin un véhicule automobile comprenant un dispositif de régulation de la circulation d'un flux d'air extérieur et/ou une installation selon l'invention.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
La figure 1 est une représentation schématique d'une face avant d'un véhicule selon un mode de réalisation comprenant une installation et un dispositif de régulation selon l'invention.
La figure 2 est une vue simplifiée de côté du dispositif de régulation selon un premier mode de réalisation dans lequel seule une partie d'un cadre est représentée.
La figure 3 est une vue schématique en coupe transversale du dispositif de régulation selon la figure 2 lorsque des volets sont dans une première position.
La figure 4 est une vue schématique en coupe transversale du dispositif de régulation selon la figure 2 lorsque les volets sont dans une deuxième position.
La figure 5 est une vue schématique en coupe transversale du dispositif de régulation selon une alternative du premier mode de réalisation.
La figure 6 est une vue simplifiée en perspective du dispositif de régulation selon le premier mode de réalisation lorsque les volets sont dans la première position.
La figure 7 est une vue simplifiée en perspective du dispositif de régulation selon le premier mode de réalisation lorsque les volets sont dans la première position.
La figure 8 est une vue simplifiée en perspective du dispositif de régulation selon le premier mode de réalisation lorsque les volets sont dans la première position.
La figure 9 est une vue simplifiée en perspective du dispositif de régulation selon le premier mode de réalisation lorsque les volets sont dans la deuxième position.
La figure 10 est une vue schématique en coupe transversale du dispositif de régulation selon une alternative du premier mode de réalisation.
La figure 11 est une vue schématique de face du dispositif de régulation illustré à la figure 10.
La figure 12 est une vue schématique en coupe transversale du dispositif de régulation selon une alternative du premier mode de réalisation.
La figure 13 est une vue schématique en coupe transversale du dispositif de régulation selon un deuxième mode de réalisation.
La figure 14 est une vue schématique en coupe transversale du dispositif de régulation selon un troisième mode de réalisation.

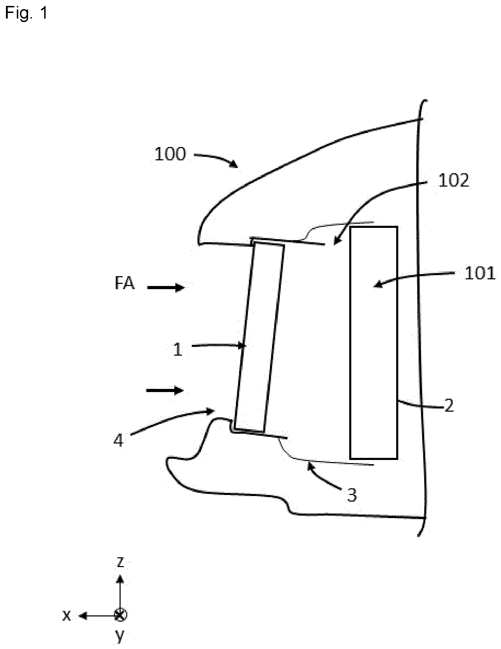

La figure 1 illustre schématiquement un exemple de réalisation d'un véhicule 100, notamment un véhicule automobile équipé d'un module de refroidissement 101, lequel peut être intégré pour tout ou partie à une installation de ventilation, de chauffage et/ou de climatisation, aussi qualifiée de HVAC, et/ou à une installation de refroidissement du moteur. Le module de refroidissement 101 comprend notamment au moins un échangeur thermique 2 configuré pour mettre en œuvre un échange thermique avec un flux d'air FA extérieur le traversant selon les besoins établis selon la phase de fonctionnement du véhicule. Dans l'ensemble de la description ci-après, le module de refroidissement 101 est décrit comme comprenant un seul échangeur thermique 2, il est néanmoins entendu que la présente invention s'étend à un module de refroidissement comprenant une pluralité d'échangeurs thermiques 2.

L'installation 102 comprend un dispositif de régulation 1 de la circulation du flux d'air FA extérieur, notamment à commande électrique, et au moins l'échangeur thermique 2 pouvant être configuré pour refroidir ou chauffer ledit flux d'air FA. L'installation 102comprend, en outre, un boîtier 3 formant un circuit de distribution du flux d'air FA extérieur dans lequel sont disposés le dispositif de régulation 1 et l'échangeur thermique 2. Le boîtier 3 s'ouvre sur une calandre 4 du véhicule 100, notamment en face avant du véhicule 100, par laquelle l'installation est alimentée en flux d'air FA extérieur, le dispositif de régulation 1 étant disposé en amont de l'échangeur thermique 2 selon le sens de circulation du flux d'air FA extérieur.

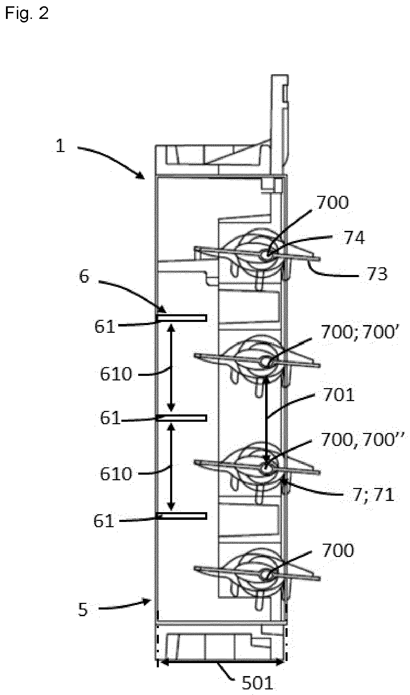

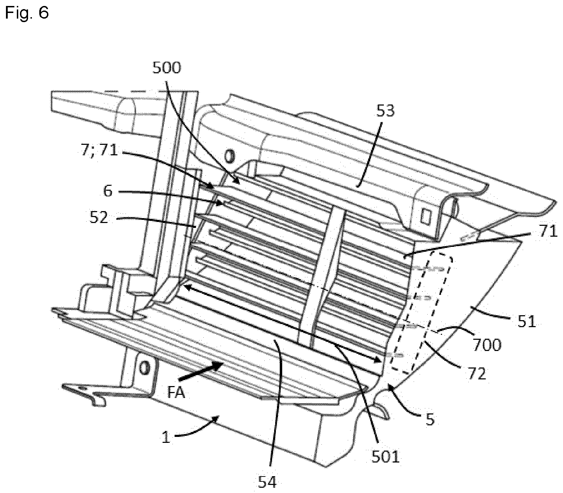

Les figures 2 à 14 illustrent plus en détail différents exemples et modes de réalisation du dispositif de régulation 1 selon l'invention. En référence aux orientations et directions définies précédemment, la direction longitudinale est représentée par l'axe Ox et correspond à une direction d'avancement du véhicule tandis que les axes Oy et Oz représentent respectivement les directions verticale et transversale. Ces axes définissent ensemble un repère Oxyz représenté sur les figures le nécessitant. Egalement, le sens de circulation du flux d'air extérieur est schématiquement représenté par des flèches. Enfin, il est entendu que les termes « premier », « deuxième » ont vocation à distinguer des éléments similaires et non à définir une hiérarchie desdits éléments.

De manière générale, le dispositif de régulation 1 comprend un cadre 5, un organe de blocage 6 et un moyen de réglage 7 de l'admission du flux d'air FA extérieur comprenant une pluralité de volets 71 mobiles reliés audit cadre 5 et déplacés par un moyen d'entrainement 72.

Le cadre 5 peut comprendre au moins un premier flanc 51, un deuxième flanc 52, un troisième flanc 53 et un quatrième flanc 54. Les premier flanc 51 et deuxième flanc 52 sont opposés l'un à l'autre et sont reliés entre eux par le troisième flanc 53 et le quatrième flanc 54. Dans l'exemple illustré, le cadre 5, notamment les flancs du cadre 5, peut ainsi présenter, de manière non limitative, une forme continue sensiblement parallélépipédique définissant un volume interne 500 du dispositif de régulation 1.

En particulier, au moins deux flancs opposés du cadre 5 peuvent être configurés pour porter le moyen de réglage 7. En l'espèce il s'agit du premier flanc 51 et du deuxième flanc 52. Il en va de même pour l'organe de blocage 6.

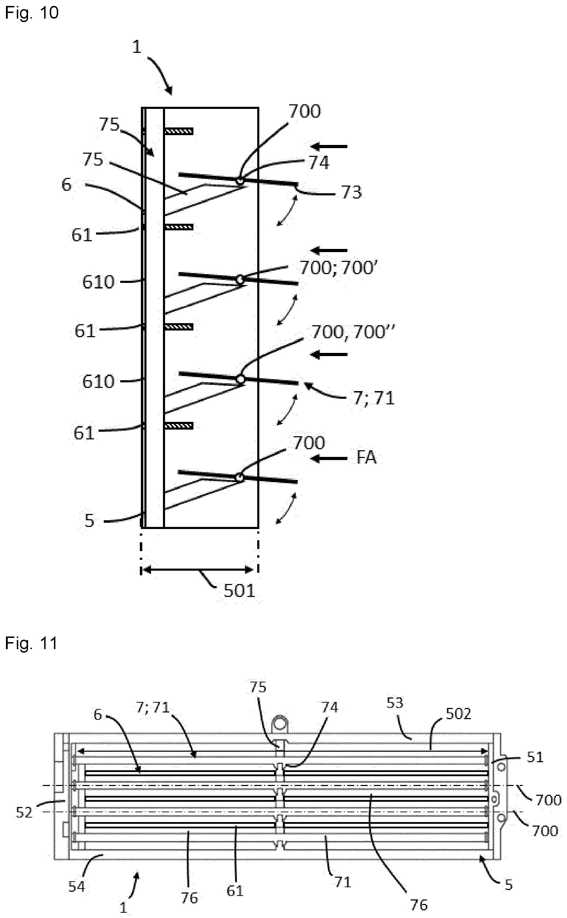

De manière optionnelle, tel qu'illustré dans les alternatives des figures 10 et 11, le cadre 5 peut, en outre, comprendre au moins un bras 75 de support sur lequel sont montés pivotant tout ou partie de la pluralité de volets 71 du moyen de réglage 7. De manière préférentielles, le cadre 5 peut comprendre une pluralité de bras 75 de support répartis dans le volume interne 500.

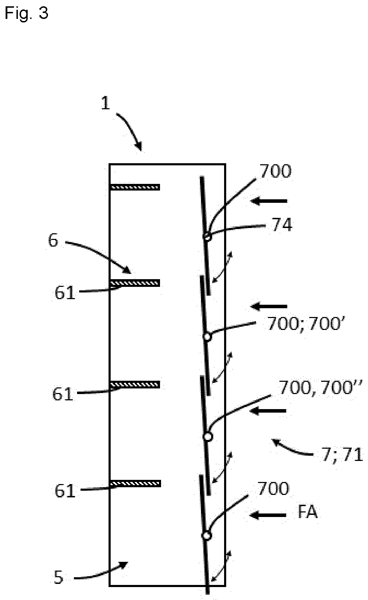

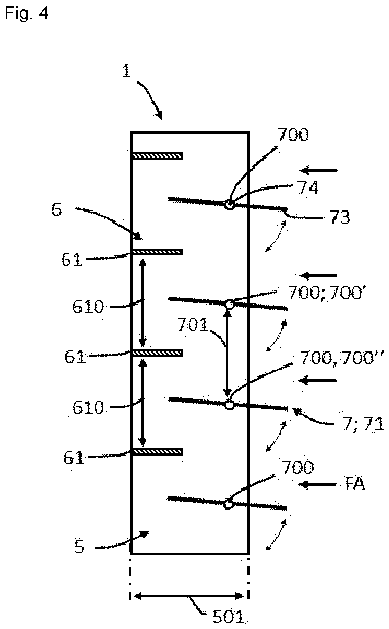

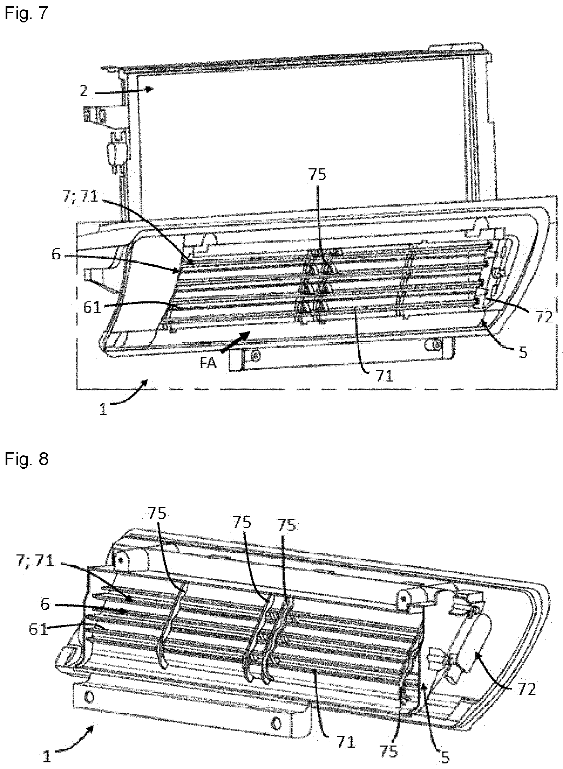

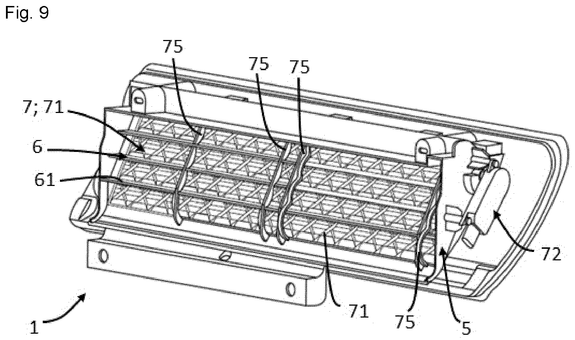

Tel que précédemment exposé, le moyen de réglage 7 comprend une pluralité de volets 71 mobiles. Les volets 71 sont chacun montés pivotants sur le cadre 5 afin d'être déplacés, par pivotement autour d'un axe de pivotement 700 qui leur est propre, entre une première position et une deuxième position. Dans la première position, représentée aux figures 3 et 9, les volets 71 restreignent le passage du flux d'air extérieur à travers la calandre 4 du véhicule 100 tandis que dans la deuxième position, représentée aux figures 4 et 8, lesdits volets permettent la circulation du flux d'air FA à travers la calandre 4 du véhicule 100, c'est-à-dire vers le l'échangeur thermique 2. Notamment chaque volet 73 s'étend le long d'un axe de pivotement 700 qui lui est propre et est monté pivotant autour de ce même axe de pivotement 700.

Autrement dit, lorsque les volets 71 sont déplacés dans la première position, le dispositif de régulation 1 est dans une configuration « fermée » prévenant l'entrée du flux d'air FA dans l'installation. A l'inverse, lorsque les volets 71 sont déplacés dans la deuxième position, le dispositif de régulation 1 est dans une configuration « ouverte » permettant la circulation du flux d'air FA au sein de l'installation, notamment au travers du dispositif de régulation 1 et de l'échangeur thermique 2. Il est entendu que, de manière optionnelle, le dispositif de régulation 1 pourra également être configuré afin de mettre en œuvre une ou plusieurs configuration(s) « intermédiaire(s) » afin d'assurer la circulation d'un flux d'air FA extérieur réduit par rapport à la configuration ouverte, notamment en fonction des besoins de l'installation ou du véhicule 100. Dans de telles configurations, au moins une partie des volets 71 peuvent être déplacés dans une position intermédiaire comprise entre la première position et la deuxième position. De telles configurations ne seront pas détaillées davantage pour la présente invention.

Le dispositif de régulation 1 comprend notamment un moyen d'entraînement 72 apte à engager par entraînement tout ou partie de la pluralité de volets 71 afin de les déplacer sélectivement entre la première position et la deuxième position. A titre d'exemple non limitatif, le mécanisme d'entraînement peut comprendre un arbre d'entraînement et/ou un actionneur, tel qu'un moteur ou tout autre dispositif électromécanique, non représentés.

Les volets 71 présentent une structure allongée. Notamment, les volets 71 peuvent comprendre une ou plusieurs lames 73 montées sur un pivot 74 centré sur l'axe de pivotement 700 correspondant. Par exemple, le pivot 74 peut être monté sur des flancs opposés ou, de manière alternative ou en combinaison, sur des bras 75 tels que précédemment exposés. Les bras 75 peuvent alors s'étendre transversalement, voire orthogonalement, à au moins l'un des axes de pivotement 700 et porter le pivot 74 d'au moins un volet 71.

Les lames 73 et/ou volets 71 peuvent présenter une forme plane ou sensiblement plane, tel qu'illustré. Alternativement, de tel(le)s lames 73 et/ou volets 71 peuvent présenter une forme sensiblement courbée. Les volets 71, notamment les lames 73, sont préférentiellement dimensionnés de sorte que, lorsqu'ils sont dans la première position, ils assurent à eux seuls l'obstruction du flux d'air FA extérieur. Autrement dit, lorsque les volets 71 sont fermés, des volets 71 adjacents peuvent au moins en partie s'étendre en recouvrement l'un de l'autre le long du sens de circulation du flux d'air FA extérieur. Alternativement, les volets 71, lorsqu'ils sont fermés dans la première position, peuvent s'étendre à proximité l'un de l'autre afin d'obstruer le passage du flux d'air FA extérieur tout en permettant le déplacement desdits volets 71.

Au sein du dispositif de régulation 1, les axes de pivotement 700 d'au moins deux volets 71 adjacents, appelés ci-après premier axe de pivotement 700' et deuxième axe de pivotement 700", s'étendent parallèles l'un à l'autre. Dans l'exemple illustré, les axes de pivotement 700 de l'ensemble des volets 71 de la pluralité de volets 71 s'étendent parallèlement les uns aux autres.

Le premier axe de pivotement 700' et le deuxième axe de pivotement 700" sont séparés l'un de l'autre par un espace 76 défini par une dimension d'entraxe 701. On entend par « dimension d'entraxe 701 » la dimension séparant deux axes de pivotement 700, et donc deux volets 71, adjacents mesurée le long d'une première direction orthogonale aux axes de pivotement 700 et passant par lesdits axes. Par exemple la première direction peut s'étendre verticalement ou à proximité de la verticale. Selon un exemple de réalisation particulier, les volets 71 peuvent présenter un agencement régulier au sein du moyen de réglage 7, c'est à dire que chaque volet 71 est séparé d'un volet adjacent par une dimension d'entraxe 701 égale ou sensiblement égale.

Afin de prévenir le passage de projections extérieures de dimensions inférieure à la dimension d'entraxe, le dispositif de régulation 1 comprend avantageusement l'organe de blocage 6 du flux d'air FA extérieur. Tel que précédemment exposé et similairement au moyen de réglage 7, l'organe de blocage 6 est porté par le cadre 5. Notamment, l'organe de blocage 6 et le moyen de réglage 7 peuvent être portés par au moins un flanc commun. Selon l'exemple illustré, l'organe de blocage 6 peut être porté par le premier flanc 51 et le deuxième flanc 52 du cadre 5. Notamment, l'organe de blocage 6 s'étend essentiellement dans le volume interne 500 du cadre 5 afin de ne pas générer d'encombrement supplémentaire. Avantageusement, afin de limité l'encombrement généré par le dispositif de régulation 1, l'organe de blocage 6 et le moyen de réglage 7 s'étendent essentiellement dans le volume interne 500. Particulièrement, l'organe de blocage 6 peut, en outre, être disposé afin de ne pas entraver les trajectoires des différents volets 71 de la pluralité de volets 71 lorsque ceux-ci sont déplacés entre la première position et la deuxième position. En d'autres termes, l'organe de blocage 6 est disposé de manière à s'étendre hors de volumes délimités par la trajectoire, ou le balayage, de chacun des volets 71 lorsque ceux-ci sont déplacés entre la première position et la deuxième position.

De manière optionnelle, l'organe de blocage 6 peut être au moins en partie relié au bras 75 et/ou au cadre 5.

L'organe de blocage 6 s'étend, de préférence, au moins sur l'ensemble d'un écartement 502 séparant les flancs opposés du cadre 5 portant le moyen de réglage 7, c'est-à-dire, dans l'exemple illustré, le premier flanc 51 et le deuxième flanc 52.

Au sein du dispositif de régulation 1, l'organe de blocage 6 est configuré pour être disposé en amont de l'échangeur thermique 2 selon le sens de circulation du flux d'air FA extérieur. En particulier, l'organe de blocage 6 est configuré et agencé, relativement à la pluralité de volets 71 du moyen de réglage 7, afin d'entraver le passage de projections extérieures au travers du dispositif de régulation 1 le long du sens de circulation du flux d'air FA extérieur au moins lorsque les volets 71 sont disposés dans la deuxième position.

L'organe de blocage 6 est configuré pour être disposé à proximité, notamment à proximité immédiate, de la pluralité de volets 71 du moyen de réglage 7 de l'admission du flux d'air FA extérieur. On entend par « proximité » qu'une distance séparant l'organe de blocage 6, notamment une ailette 61, du moyen de réglage 7, notamment d'un volet 71 le plus proche, est inférieure à deux fois, voire 1.5 fois, la dimension d'entraxe 701 séparant des volets 71 adjacents.

De manière optionnelle, le moyen de réglage 7 et l'organe de blocage 6 s'inscrivent tous deux essentiellement dans le volume interne 500 du cadre 5. Ainsi, selon différents modes de réalisation, exposés ci-après, l'organe de blocage 6 peut au moins en partie être disposé en aval et/ou aligné relativement au moyen de réglage 7 selon le sens de circulation du flux d'air FA extérieur ou l'organe de blocage 6 peut au moins en partie être disposé en amont et/ou aligné relativement au moyen de réglage 7 selon le sens de circulation du flux d'air FA extérieur.

Les figures 2 à 12 illustrent un exemple d'un premier mode de réalisation du dispositif de régulation 1 dans lequel l'organe de blocage 6 est configuré pour être interposé entre la pluralité de volets 71 du moyen de réglage 7 de l'admission du flux d'air FA extérieur et l'échangeur thermique 2 selon le sens de circulation du flux d'air FA extérieur. En d'autres termes, selon un tel mode de réalisation, le flux d'air FA extérieur circule d'abord au travers des volets 71 du moyen de réglage 7 puis au travers de l'organe de blocage 6, l'organe de blocage étant disposé en aval des volets 71 selon le sens de circulation du flux d'air FA extérieur.

L'organe de blocage 6 peut comprendre au moins une pluralité d'ailettes 61 s'étendant parallèlement à au moins l'un des axes de pivotement 700, notamment le premier axe de pivotement 700' ou le deuxième axe de pivotement 700". On entend par « ailette » un corps de structure allongée. A titre d'exemple non limitatifs, l'ailette peut présenter un profil plat, courbé, carré, rectangulaire, polygonal ou encore circulaire. Particulièrement, l'organe de blocage 6 est, en outre, disposé afin de ne pas entraver les trajectoires des différents volets 71 de la pluralité de volets 71 lorsque ceux-ci sont déplacés entre la première position et la deuxième position. En d'autres termes, l'organe de blocage 6 est disposé de manière à s'étendre hors de volumes délimités par la trajectoire, ou le balayage, de chacun des volets 71. Selon un exemple particulier de réalisation, non représenté, au moins un volet 71 peut être configuré de sorte à s'étendre en appui de l'organe de blocage 6 lorsqu'il est positionné dans la première position ou dans la deuxième position. Alternativement, au moins un volet 71 peut être configuré de sorte à s'étendre en appui d'un volet 71 adjacent lorsqu'il est positionné dans la première position ou dans la deuxième position.

L'organe de blocage 6, notamment les ailettes 61, s'étendent sur une partie d'une profondeur 501 du cadre 5, notamment une profondeur 501 du premier flanc 51 et/ou du deuxième flanc 52, définie le long d'une deuxième direction orthogonale à la première direction. Notamment, une telle deuxième direction est sensiblement parallèle au sens de circulation du flux d'air FA et/ou à la direction longitudinale.

L'organe de blocage 6 peut avantageusement être rapporté sur le cadre 5. Par exemple, les ailettes 61 peuvent être solidaires d'un support, non représenté, qui est agencé sur le cadre 5, notamment dans un emplacement prévu à cet effet. Alternativement, l'organe de blocage 6, notamment tout ou partie des ailettes 61, peut être venue de matière avec au moins un flanc 51, 52 du cadre. Par exemple, l'organe de blocage 6 peut alors être obtenu par moulage.

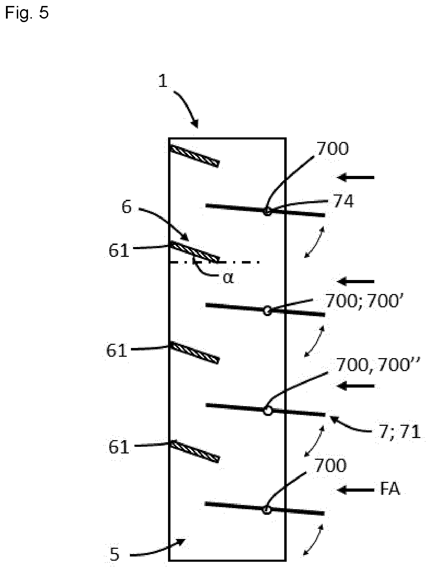

De manière optionnelle, tel qu'illustré en alternative à la figure 5, au moins une face d'une ailette 61 peut présenter un angle d'inclinaison α relativement au cadre 5 compris entre 0° et ±45°, voire entre 0° et ±30°, de sorte à dévier la circulation du flux d'air FA extérieur. On entend par « dévier » qu'une trajectoire du flux d'air FA extérieur est modifiée lorsque celui-ci entre en contact avec ladite ailette. Un tel angle peut être définit relativement à la deuxième direction ou encore en fonction du sens de circulation du flux d'air FA extérieur. En d'autres termes, une telle ailette 61 a fonction de déflecteur du flux d'air FA extérieur. A noter que les valeurs de l'inclinaison α peuvent notamment être amenées à varier en fonction de la taille des ailettes ou encore du positionnement et de la distance du module de traitement thermique 2 relativement au dispositif de régulation 1.

Les ailettes 61 sont disposées, relativement aux volets 71, afin qu'au moins une ailette 61 s'étende, le long du sens de circulation du flux d'air FA extérieur, en regard de chacun des espaces 76 séparant deux axes de pivotement 700 de volets 71 adjacents. Autrement dit, au moins une ailette 61 présente une position, le long de la première direction, interposée entre les positions de deux axes de pivotement 700 de volets 71 adjacents, par exemple le premier axe de pivotement 700' et le deuxième axe de pivotement 700". Un tel positionnement de l'ailette 61 relativement aux volets 71 permet l'obstruction d'au moins une partie des projections extérieures présentant une dimension inférieure à la dimension d'entraxe 701 de l'espace 76. Selon un exemple de réalisation non limitatif, l'au moins une ailette 61 peut être disposée de sorte à s'étendre hors de volumes délimités par les volets 71 lorsqu'ils sont déplacés entre la première position et la deuxième position. Autrement dit, l'ailette 61 est disposée hors des trajectoires des volets 71 lorsque ceux-ci sont déplacés entre la première position et la deuxième position.

Notamment, l'ailette 61 est positionnée de sorte à être séparée de chacun des axes de pivotement 700 délimitant l'espace 76 correspondant par un espacement 610, défini le long de la première direction, de dimension inférieure ou égale à 30 mm, notamment inférieure ou égale à 20 mm, voire inférieure ou égale à 17mm. Il est entendu qu'un tel espacement 610 est évalué entre l'axe de pivotement 700 considéré et un point ou un côté le plus proche de l'ailette 61.

De manière optionnelle, l'ailette 61 peut être particulièrement disposée afin de s'étendre à équidistance des axes de pivotement 700 délimitant l'espace 76 considéré, par exemple du premier axe de pivotement 700' et du deuxième axe de pivotement 700".

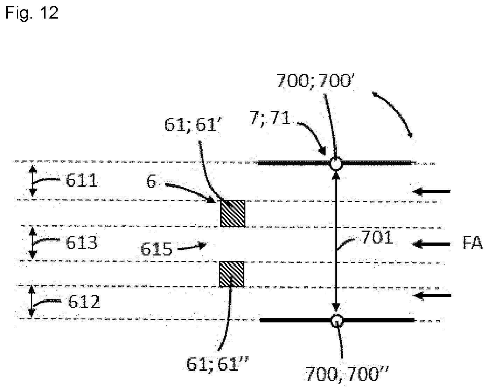

Selon une alternative du premier mode de réalisation, représentée à la figure 12, un sous-ensemble d'ailettes 615 de la pluralité d'ailettes 61 peut être disposé en regard d'un même espace 76 séparant deux axes de pivotement 700 de volets 71 adjacents, par exemple le premier axe de pivotement 700' et le deuxième axe de pivotement 700", le long du sens de circulation du flux d'air FA extérieur. Notamment, une telle alternative peut être mise en œuvre lorsque la dimension de l'espace 76 d'entraxe est importante, par exemple supérieure à 30 mm, voire à 50 mm.

Dans une telle alternative, une première ailette extrême 61' du sous-ensemble d'ailettes 615, la plus proche du premier axe de pivotement 700', est disposée afin de présenter un premier espacement 611, le long de la première direction, relativement audit premier axe de pivotement 700'.

Similairement, une deuxième ailette extrême 61" du sous-ensemble d'ailettes 615, la plus proche du deuxième axe de pivotement 700", présente un deuxième espacement 612, le long de la première direction, relativement audit deuxième axe de pivotement 700".

En outre, des ailettes 61 adjacentes du sous-ensemble d'ailettes 615 présentent un espacement intermédiaire 613, le long de la première direction.

De manière avantageuse, le premier espacement 611, le deuxième espacement 612 et l'espacement intermédiaire 613 présentent une dimension inférieure ou égale à 30 mm, notamment inférieure ou égale à 20 mm, voire inférieure ou égale à 17mm.

De la sorte, lorsque les dimensions d'entraxe séparant des volets 71 adjacents sont importantes, le sous-ensemble d'ailettes 615 disposé en regard de l'un desdits espaces 76 correspondant est apte à prévenir l'entrée, dans l'installation 102, de projections extérieures présentant des dimensions inférieures à la dimension d'entraxe 701 de l'espace 76.

A titre d'exemple non limitatif, pour une dimension d'entraxe 701 comprise entre 30 et 50 mm, le sous-ensemble peut comprendre deux ailettes 61 disposées en regard du même espace 76, tandis que pour une dimension d'entraxe 701 supérieure à 50 mm et inférieure à 70 mm, le sous-ensemble peut comprendre trois ailettes 61 disposées en regard du même espace 76.

Ainsi, indépendamment de l'alternative mise en œuvre, lorsque les volets 71 du moyen de réglage 7 sont dans la première position fermée ils préviennent l'entrée du flux d'air FA dans l'installation 102. Lorsque les volets 71 sont dans la deuxième position, c'est à dire en configuration ouverte, le flux d'air FA extérieur passe au travers du moyen de réglage 7 puis de l'organe de blocage 6 afin de circuler dans l'installation 102, notamment vers l'échangeur thermique 2 et les projections extérieures sont arrêtées par les volets 71 et/ou par les ailettes 61. Les volets 71 font obstruction aux projections de dimensions supérieures à la dimension d'entraxe 701 de l'espace 76 d'entraxe tandis que la combinaison des volets 71 et des ailettes 61 de l'organe de blocage 6 fait obstruction aux projections extérieures présentant des dimensions inférieures à la dimension d'entraxe 701. Il en va de même lorsque les volets 71 sont dans une position intermédiaire.

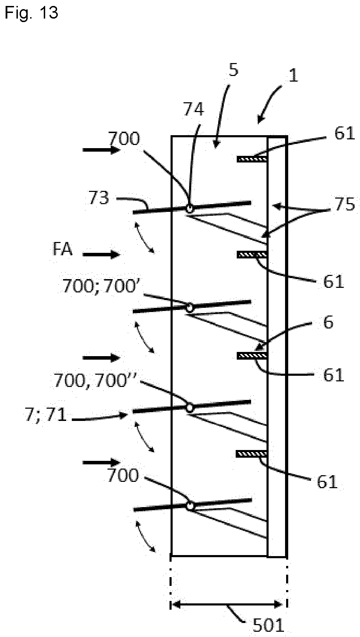

La figure 13 illustre un exemple d'un deuxième mode de réalisation similaire au premier mode de réalisation, aussi l'ensemble de la précédente description et les différentes alternatives mentionnées s'appliquent-elles *mutatis mutandis.* Ce deuxième mode de réalisation se distingue du précédent en ce que la pluralité de volets 71 du moyen de réglage 7 de l'admission du flux d'air FA extérieur est configurée pour être interposée entre l'organe de blocage 6 et l'au moins un échangeur thermique 2 le long du sens de circulation du flux d'air FA extérieur.

Autrement dit, dans un tel mode de réalisation, l'organe de blocage 6 s'étend au moins en partie en amont du moyen de réglage 7 le long du sens de circulation du flux d'air FA extérieur. Notamment, les volets 71 du moyen de réglage 7 sont interposés entre la pluralité d'ailettes 61 et l'échangeur thermique 2.

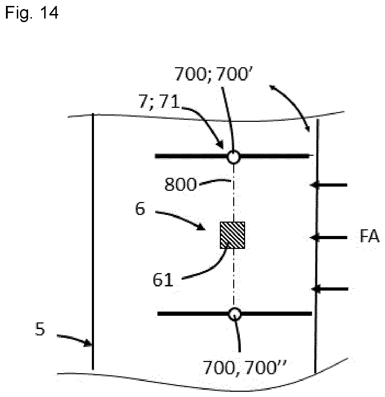

Selon un troisième mode de réalisation, illustré à la figure 14, l'organe de blocage 6 peut être disposé de manière à être en partie aligné, ou sensiblement aligné, avec le moyen de réglage 7 le long du sens de circulation du flux d'air FA extérieur. Autrement dit, un axe 800, orthogonal à un axe de pivotement 700 d'au moins un volet 71 et transversal au sens de circulation du flux d'air FA extérieur, passe par au moins une partie de l'organe de blocage 6, par exemple au moins une ailette 31, et par au moins une partie du moyen de réglage 7, notamment au moins un volet 71. Un tel mode de réalisation est similaire au premier et au deuxième modes de réalisation, aussi, la description ci-dessus ainsi que les différentes alternatives décrites s'appliquent-t-elles *mutatis mutandis.*

Egalement, selon d'autres modes de réalisation alternatifs, non représentés, le troisième mode de réalisation peut être exécuté en combinaison du premier mode de réalisation ou du deuxième mode de réalisation. Autrement dit, tel que décrit précédemment, l'organe de blocage 6 peut au moins en partie être disposé en aval et/ou aligné relativement au moyen de réglage 7 selon le sens de circulation du flux d'air FA extérieur ou l'organe de blocage 6 peut au moins en partie être disposé en amont et/ou aligné relativement au moyen de réglage 7 selon le sens de circulation du flux d'air FA extérieur.

Ainsi, la présente invention propose un dispositif de régulation de la circulation d'un flux d'air extérieur pour une calandre ou une bouche d'aération d'un véhicule comprenant d'une part un moyen de réglage de l'admission du flux d'air comportant des volet mobiles et d'autre part un organe de blocage s'étendant au moins en regard d'un espace séparant des volets adjacents afin d'entraver le passage de projections extérieures au travers du dispositif de régulation.

Le dispositif selon l'invention permet avantageusement d'assurer, avec une solution simple de mise en œuvre et à faible coût, l'obstruction de projections extérieure dès l'entrée de l'installation, prévenant ainsi la présence de projections extérieures dans cette dernière tout en s'affranchissant des contraintes classiquement imposées par l'intégration de grilles au niveau d'un échangeur thermique, notamment relatives à la grande variété de modèle.

## Revendications

1. Dispositif de régulation (1) de la circulation d'un flux d'air (FA) extérieur pour une calandre (4) ou une bouche d'aération d'un véhicule (100) comprenant un cadre (5) et un moyen de réglage (7) de l'admission du flux d'air (FA) extérieur comprenant une pluralité de volets (71) reliés audit cadre (5) et déplacés par un moyen d'entrainement (72), **caractérisé en ce que**:
- les volets (71) sont chacun montés pivotants autour d'un axe de pivotement (700) par rapport au cadre (5) de sorte à être pivotés entre une première position, restreignant le flux d'air extérieur à travers la calandre (4) ou la bouche d'aération du véhicule (100), et une deuxième position permettant la circulation du flux d'air (FA) au travers de celle-ci ;
- les axes de pivotement (700) des volets (71) sont parallèles entre eux, des volets (71) adjacents étant séparés par un espace (76) défini par une dimension d'entraxe (701) le long d'une première direction orthogonale aux axes de pivotement (700) et passant par lesdits axes ;
- le dispositif de régulation (1) comprend un organe de blocage (6) porté par le cadre (5) et comportant une pluralité d'ailettes (61) s'étendant parallèlement à au moins l'un des axes de pivotement (700), l'agencement desdites ailettes (61) relativement à la pluralité de volets (71) étant configuré pour entraver le passage de projections extérieures au travers du dispositif de régulation (1) le long du sens de circulation du flux d'air (FA) extérieur au moins lorsque les volets (71) sont disposés dans la deuxième position, l'organe de blocage (6) étant disposé, relativement au moyen de réglage (7), notamment relativement à une ailette (61) la plus proche du moyen de réglage, à une distance inférieure à deux fois , voire 1,5 fois, la dimension d'entraxe (701) séparant les volets (71) adjacents.

2. Dispositif de régulation (1) selon la revendication précédente, dans lequel au moins une ailette (61) de la pluralité d'ailettes est disposée en regard de chacun des espaces (76) séparant deux axes de pivotement (700) de volets (71) adjacents.

3. Dispositif de régulation (1) selon la revendication précédente, dans lequel l'au moins une ailette est séparée de chacun des axes de pivotement (700) délimitant l'espace (76) correspondant par un espacement (610), défini le long de la première direction, de dimension inférieure ou égale à 30 mm, notamment inférieure ou égale à 20 mm, voire inférieure ou égale à 17mm.

4. Dispositif de régulation (1) selon l'une des revendications 1 ou 2, dans lequel un sous-ensemble d'ailettes (615) de la pluralité d'ailettes (61) est disposé, le long du sens de circulation du flux d'air (FA) extérieur, en regard d'au moins un même espace (76) séparant deux axes de pivotement (700) de volets (71) adjacents, dits premier axe de pivotement (700') et deuxième axe de pivotement (700"):
- une première ailette extrême (61') du sous-ensemble d'ailettes (615) présentant un premier espacement (611), le long de la première direction, relativement au premier axe de pivotement (700');
- une deuxième ailette extrême (61") du sous-ensemble d'ailettes (615) présentant un deuxième espacement (612), le long de la première direction, relativement au deuxième axe de pivotement (700") ;
- des ailettes (61) adjacentes du sous-ensemble d'ailettes (615) présentant un espacement intermédiaire (613), le long de la première direction ;
le premier espacement (611), le deuxième espacement (612) et l'espacement intermédiaire (613) étant de dimension inférieure ou égale à 30 mm, notamment inférieure ou égale à 20 mm, voire inférieure ou égale à 17mm.

5. Dispositif de régulation (1) selon l'une des revendications précédentes, dans lequel au moins une face d'une ailette (61) de la pluralité d'ailettes (61) présente un angle d'inclinaison α relativement au cadre (5) compris entre 0° et ±45°, voire entre 0° et ±30°, de sorte à dévier la circulation du flu x d'air (FA) extérieur.

6. Dispositif de régulation (1) selon l'une des revendications précédentes, dans lequel le cadre (5) comprend au moins un premier flanc (51) et un deuxième flanc (52), opposés l'un à l'autre et reliés entre eux par un troisième flanc (53) et un quatrième flanc (54), le premier flanc (51) et le deuxième flanc (52) portant le moyen de réglage (7) et l'organe de blocage (6).

7. Dispositif de régulation (1) selon l'une des revendications précédentes, dans lequel le cadre (5) comprend au moins un bras (75) de support s'étendant transversalement à au moins un axe de pivotement (700) et sur lequel sont montés pivotant tout ou partie de la pluralité de volets (71) du moyen de réglage (7), l'organe de blocage (6) étant au moins en partie relié audit bras (75).

8. Dispositif de régulation (1) selon l'une des revendications précédentes, dans lequel l'organe de blocage (6) s'étend essentiellement dans un volume interne (500) du dispositif de régulation (1), délimité par le cadre (5).

9. Dispositif de régulation (1) selon l'une des revendications précédentes, dans lequel l'organe de blocage (6) est configuré pour être disposé à proximité de la pluralité de volets (71) du moyen de réglage (7) de sorte à être interposé entre tout ou partie du moyen de réglage (7) et au moins un échangeur thermique (2) le long du sens de circulation du flux d'air (FA) extérieur et/ou de sorte à être aligné avec tout ou partie du moyen de réglage (7) le long d'un axe (800) orthogonal à un axe de pivotement (700) d'au moins un volet (71) et transversal au sens de circulation du flux d'air (FA) extérieur.

10. Dispositif de régulation (1) selon l'une des revendications 1 à 8, dans lequel l'organe de blocage (6) est configuré pour être disposé à proximité de la pluralité de volets (71) du moyen de réglage (7) de sorte que tout ou partie de la pluralité de volets (71) est interposée entre l'organe de blocage (6) et au moins un échangeur thermique (2) le long du sens de circulation du flux d'air (FA) extérieur et/ou de sorte que l'organe de blocage (6) est aligné avec tout ou partie du moyen de réglage (7) le long d'un axe (800) orthogonal à un axe de pivotement (700) d'au moins un volet (71) et transversal au sens de circulation du flux d'air (FA) extérieur.

11. Installation (102) d'un véhicule (100), comprenant un dispositif de régulation (1) de la circulation d'un flux d'air (FA) extérieur selon l'une des revendications précédentes et au moins un échangeur thermique (2) configuré pour refroidir ou chauffer le flux d'air (FA) extérieur, le dispositif de régulation (1) étant disposé en amont de l'au moins un échangeur thermique (2) le long du sens de circulation du flux d'air (FA) extérieur.

12. Véhicule (100) automobile comprenant un dispositif de régulation (1) de la circulation d'un flux d'air (FA) extérieur selon l'une des revendications 1 à 10 et/ou une installation (102) selon la revendication précédente.

## Patentansprüche

1. Vorrichtung zur Regulierung (1) der Strömung eines Außenluftstroms (FA) für einen Kühlergrill (4) oder einen Lüftungsdurchlass eines Fahrzeugs (100), beinhaltend einen Rahmen (5) und ein Mittel zum Einstellen (7) des Einlasses des Außenluftstroms (FA), das eine Vielzahl von Klappen (71) beinhaltet, die mit dem Rahmen (5) verbunden sind und durch ein Antriebsmittel (72) bewegt werden, **dadurch gekennzeichnet, dass**:
- die Klappen (71) in Bezug auf den Rahmen (5) um eine Schwenkachse (700) jeweils derart schwenkbar angebracht sind, dass sie zwischen einer ersten Position, die den Außenluftstrom durch den Kühlergrill (4) oder den Lüftungsdurchlass des Fahrzeugs (100) hindurch einschränkt, und einer zweiten Position, die die Strömung des Luftstroms (FA) durch diesen hindurch gestattet, geschwenkt werden;
- die Schwenkachsen (700) der Klappen (71) zueinander parallel sind, wobei benachbarte Klappen (71) durch einen Raum (76) getrennt sind, der durch ein Mittenabstandsmaß (701) entlang einer ersten Richtung, die orthogonal zu den Schwenkachsen (700) ist und durch die Achsen verläuft, definiert wird;
- die Regulierungsvorrichtung (1) ein Blockierorgan (6) beinhaltet, das von dem Rahmen (5) getragen wird und eine Vielzahl von Rippen (61) umfasst, die sich parallel zu mindestens einer der Schwenkachsen (700) erstrecken, wobei die Einrichtung der Rippen (61) relativ zu der Vielzahl von Klappen (71) dazu konfiguriert ist, dem Durchgang von von außen auftreffenden Teilchen entlang der Strömungsrichtung des Außenluftstroms (FA) durch die Regulierungsvorrichtung (1) hindurch mindestens dann entgegenzuwirken, wenn die Klappen (71) in der zweiten Position angeordnet sind, wobei das Blockierorgan (6) relativ zu dem Einstellmittel (7), insbesondere relativ zu einer dem Einstellmittel am nächsten liegenden Rippe (61), mit einer Distanz kleiner als das Zweifache, sogar das 1,5-fache, des Mittenabstandsmaßes (701), das die benachbarten Klappen (71) trennt, angeordnet ist.

2. Regulierungsvorrichtung (1) nach dem vorhergehenden Anspruch, wobei mindestens eine Rippe (61) der Vielzahl von Rippen gegenüber jedem der Räume (76) angeordnet ist, der zwei Schwenkachsen (700) benachbarter Klappen (71) trennt.

3. Regulierungsvorrichtung (1) nach dem vorhergehenden Anspruch, wobei die mindestens eine Rippe von jeder der Schwenkachsen (700), die den entsprechenden Raum (76) begrenzen, durch einen entlang der ersten Richtung definierten Abstand (610) getrennt ist, der ein Maß kleiner als oder gleich 30 mm, insbesondere kleiner als oder gleich 20 mm, sogar kleiner als oder gleich 17 mm aufweist.

4. Regulierungsvorrichtung (1) nach einem der Ansprüche 1 oder 2, wobei eine Rippenteilmenge (615) der Vielzahl von Rippen (61) entlang der Strömungsrichtung des Außenluftstroms (FA) gegenüber mindestens einem gleichen Raum (76) angeordnet ist, der zwei Schwenkachsen (700) benachbarter Klappen (71), als erste Schwenkachse (700') und zweite Schwenkachse (700") bezeichnet, trennt:
- wobei eine erste äußerste Rippe (61') der Rippenteilmenge (615) entlang der ersten Richtung einen ersten Abstand (611) relativ zu der ersten Schwenkachse (700') aufweist;
- wobei eine zweite äußerste Rippe (61") der Rippenteilmenge (615) entlang der ersten Richtung einen zweiten Abstand (612) relativ zu der zweiten Schwenkachse (700") aufweist;
- wobei benachbarte Rippen (61) der Rippenteilmenge (615) entlang der ersten Richtung einen ersten Zwischenabstand (613) aufweisen;
wobei der erste Abstand (611), der zweite Abstand (612) und der Zwischenabstand (613) ein Maß aufweisen, das kleiner als oder gleich 30 mm, insbesondere kleiner als oder gleich 20 mm, sogar kleiner als oder gleich 17 mm ist.

5. Regulierungsvorrichtung (1) nach einem der vorhergehenden Ansprüche, wobei mindestens eine Seite einer Rippe (61) der Vielzahl von Rippen (61) einen Neigungswinkel α relativ zu dem Rahmen (5) aufweist, der zwischen 0° und ±45°, sogar zwischen 0° und ±30°, beträgt, um die Strömung des Außenluftstroms (FA) abzulenken.

6. Regulierungsvorrichtung (1) nach einem der vorhergehenden Ansprüche, wobei der Rahmen (5) mindestens ein erstes Seitenteil (51) und ein zweites Seitenteil (52) beinhaltet, die einander gegenüberliegen und untereinander durch ein drittes Seitenteil (53) und ein viertes Seitenteil (54) verbunden sind, wobei das erste Seitenteil (51) und das zweite Seitenteil (52) das Einstellmittel (7) und das Blockierorgan (6) tragen.

7. Regulierungsvorrichtung (1) nach einem der vorhergehenden Ansprüche, wobei der Rahmen (5) mindestens einen Stützarm (75) beinhaltet, der sich quer zu mindestens einer Schwenkachse (700) erstreckt und an dem alle oder ein Teil der Vielzahl von Klappen (71) des Einstellmittels (7) schwenkbar angebracht sind, wobei das Blockierorgan (6) mindestens teilweise mit dem Arm (75) verbunden ist.

8. Regulierungsvorrichtung (1) nach einem der vorhergehenden Ansprüche, wobei sich das Blockierorgan (6) im Wesentlichen in einem Innenvolumen (500) der Regulierungsvorrichtung (1), das durch den Rahmen (5) begrenzt wird, erstreckt.

9. Regulierungsvorrichtung (1) nach einem der vorhergehenden Ansprüche, wobei das Blockierorgan (6) dazu konfiguriert ist, in der Nähe der Vielzahl von Klappen (71) des Einstellmittels (7) angeordnet zu sein, um entlang der Strömungsrichtung des Außenluftstroms (FA) zwischen dem gesamten oder einem Teil des Einstellmittels (7) und mindestens einem Wärmetauscher (2) eingefügt zu sein und/oder um entlang einer Achse (800), die zu einer Schwenkachse (700) mindestens einer Klappe (71) orthogonal und zu der Strömungsrichtung des Außenluftstroms (FA) quer verläuft, nach dem gesamten oder einem Teil des Einstellmittels (7) ausgerichtet zu sein.

10. Regulierungsvorrichtung (1) nach einem der Ansprüche 1 bis 8, wobei das Blockierorgan (6) dazu konfiguriert ist, so in der Nähe der Vielzahl von Klappen (71) des Einstellmittels (7) angeordnet zu sein, dass alle oder ein Teil der Vielzahl von Klappen (71) entlang der Strömungsrichtung des Außenluftstroms (FA) zwischen dem Blockierorgan (6) und mindestens einem Wärmetauscher (2) eingefügt sind und/oder dass das Blockierorgan (6) entlang einer Achse (800), die zu einer Schwenkachse (700) mindestens einer Klappe (71) orthogonal und zu der Strömungsrichtung des Außenluftstroms (FA) quer verläuft, nach dem gesamten oder einem Teil des Einstellmittels (7) ausgerichtet ist.

11. Anlage (102) eines Fahrzeugs (100), beinhaltend eine Vorrichtung zur Regulierung (1) der Strömung eines Außenluftstroms (FA) nach einem der vorhergehenden Ansprüche und mindestens einen Wärmetauscher (2), der dazu konfiguriert ist, den Außenluftstrom (FA) zu kühlen oder zu erwärmen, wobei die Regulierungsvorrichtung (1) entlang der Strömungsrichtung des Außenluftstroms (FA) stromaufwärts des mindestens einen Wärmetauschers (2) angeordnet ist.

12. Kraftfahrzeug (100), das eine Vorrichtung zur Regulierung (1) der Strömung eines Außenluftstroms (FA) nach einem der Ansprüche 1 bis 10 und/oder eine Anlage (102) nach dem vorhergehenden Anspruch beinhaltet.

## Claims

1. Device (1) for regulating the circulation of an external air flow (FA) for a grille (4) or an air vent of a vehicle (100) comprising a frame (5) and means (7) for adjusting the intake of the external air flow (FA) comprising a plurality of shutters (71) connected to said frame (5) and moved by drive means (72), **characterized in that**:
- the shutters (71) are each pivotally mounted about a pivot axis (700) relative to the frame (5) so as to be pivoted between a first position restricting the external air flow through the grille (4) or the air vent of the vehicle (100), and a second position allowing the air flow (FA) to circulate therethrough;
- the pivot axes (700) of the shutters (71) are parallel to each other, adjacent shutters (71) being separated by a space (76) defined by a centre-to-centre dimension (701) in a first direction orthogonal to the pivot axes (700) and passing through said axes;
- the regulating device (1) comprises a blocking member (6) carried by the frame (5) and comprising a plurality of fins (61) extending parallel to at least one of the pivot axes (700), the arrangement of said fins (61) relative to the plurality of shutters (71) being designed to prevent external projected objects from passing through the regulating device (1) in the direction of circulation of the external air flow (FA) at least when the shutters (71) are arranged in the second position, the blocking member (6) being arranged, relative to the adjustment means (7), notably relative to a fin (61) closest to the adjustment means, at a distance less than twice, or even 1.5 times, the centre-to-centre dimension (701) separating the adjacent shutters (71).

2. Regulating device (1) according to the preceding claim, wherein at least one fin (61) of the plurality of fins is arranged to face each of the spaces (76) separating two pivot axes (700) of adjacent shutters (71).

3. Regulating device (1) according to the preceding claim, wherein the at least one fin is separated from each of the pivot axes (700) delimiting the corresponding space (76) by a gap (610), defined in the first direction, of 30 mm or less, notably 20 mm or less, or even 17 mm or less.

4. Regulating device (1) according to either of Claims 1 and 2, wherein a sub-set (615) of fins of the plurality of fins (61) is arranged in the direction of circulation of the external air flow (FA), facing at least one and the same space (76) separating two pivot axes (700) of adjacent shutters (71), referred to as the first pivot axis (700') and the second pivot axis (700"):
- a first end fin (61') of the sub-set (615) of fins having a first gap (611) in the first direction, relative to the first pivot axis (700');
- a second end fin (61") of the sub-set (615) of fins having a second gap (612) in the first direction, relative to the second pivot axis (700");
- adjacent fins (61) of the sub-set (615) of fins having an intermediate gap (613) in the first direction; the first gap (611), the second gap (612) and the intermediate gap (613) being 30 mm or less, notably 20 mm or less, or even 17 mm or less.

5. Regulating device (1) according to one of the preceding claims, wherein at least one face of a fin (61) of the plurality of fins (61) has an angle of inclination α relative to the frame (5) of between 0° and ±45°, or even between 0° and ±30°, so as to divert the circulation of the external air flow (FA).

6. Regulating device (1) according to one of the preceding claims, wherein the frame (5) comprises at least a first flank (51) and a second flank (52), which are opposite each other and are connected to each other by a third flank (53) and a fourth flank (54), the first flank (51) and the second flank (52) bearing the adjustment means (7) and the blocking member (6).

7. Regulating device (1) according to one of the preceding claims, wherein the frame (5) comprises at least one support arm (75) extending transversely to at least one pivot axis (700) and on which all or some of the plurality of shutters (71) of the adjustment means (7) are pivotally mounted, the blocking member (6) being at least partially connected to said arm (75).

8. Regulating device (1) according to one of the preceding claims, wherein the blocking member (6) extends essentially in an internal volume (500) of the regulating device (1), which is delimited by the frame (5).

9. Regulating device (1) according to one of the preceding claims, wherein the blocking member (6) is designed to be arranged near to the plurality of shutters (71) of the adjustment means (7) so as to be interposed between all or some of the adjustment means (7) and at least one heat exchanger (2) in the direction of circulation of the external air flow (FA) and/or so as to be aligned with all or some of the adjustment means (7) along an axis (800) orthogonal to a pivot axis (700) of at least one shutter (71) and transverse to the direction of circulation of the external air flow (FA).

10. Regulating device (1) according to one of Claims 1 to 8, wherein the blocking member (6) is designed to be arranged near to the plurality of shutters (71) of the adjustment means (7) so that all or some of the plurality of shutters (71) are interposed between the blocking member (6) and at least one heat exchanger (2) in the direction of circulation of the external air flow (FA) and/or so that the blocking member (6) is aligned with all or some of the adjustment means (7) along an axis (800) orthogonal to a pivot axis (700) of at least one shutter (71) and transverse to the direction of circulation of the external air flow (FA).

11. Installation (102) in a vehicle (100), comprising a device (1) for regulating the circulation of an external air flow (FA) according to one of the preceding claims and at least one heat exchanger (2) designed to cool or heat the external air flow (FA), the regulating device (1) being arranged upstream of the at least one heat exchanger (2) in the direction of circulation of the external air flow (FA).

12. Motor vehicle (100) comprising a device (1) for regulating the circulation of an external air flow (FA) according to one of Claims 1 to 10 and/or an installation (102) according to the preceding claim.
